# EUROPEAN PATENT APPLICATION

(11) **EP 2 423 109 A1**
(43) Date of publication of application: **29.02.2012**
(21) Application number: 11382219.1
(22) Date of filing: 29.06.2011
(51) Int. Cl.: B64D 39/00, B64D 39/02

(54) **Wing-mounted refueling pod in a tanker aircraft**

(71) Applicant: EADS Construcciones Aeronauticas, S.A., 28022 Madrid (ES)
(72) Inventor: Hrncir, Zbynek, 28906 Getafe, Madrid (ES)
(74) Representative: Elzaburu Marquez, Alberto

(57) **Abstract**

A refueling pod (17) for a tanker aircraft (13) used for refueling a receptor aircraft (11) in flight by means of a hose and drogue device (15) comprising a streamlined-shaped first section (33) that houses the main handling equipment of the hose and drogue device (15) and a second section (35) housing the opening (37) for the deployment/retraction of the hose and drogue device (15), in which said second section (35) has an streamlined shape and houses an opening (37) which has a symmetrical shape with respect to an hypothetical X-Z plane by the longitudinal axis (31) of the refueling pod (17) and is placed below an hypothetical X-Y plane by said longitudinal axis (31) for reducing the turbulence behind the refueling pod (17) and improving therefore the stability of the hose and drogue device (15).

## Description

### FIELD OF THE INVENTION

The present invention relates generally to aircraft refueling systems using a hose and drogue device and more specifically to the refueling pods mounted on the wings of the tanker aircraft.

### BACKGROUND

One method for in-flight refueling operations is based on the use of a hose and drogue device that makes contact with a probe of the receptor aircraft allowing fuel to pass from a tanker aircraft to a receptor aircraft.

The equipment for the deployment/retraction of the hose and drogue device is usually housed in a refueling pod having an opening for the deployment/retraction of the hose and drogue device. The refueling pod can be mounted on a lower zone of the fuselage of the tanker aircraft or on a lower zone of the wings of the tanker aircraft.

The typical configuration of a refueling pod mounted under a wing of a tanker aircraft or under the fuselage of a tanker aircraft is as a streamlined body with a blunt end in its final zone where it is located its opening.

This configuration generates turbulence behind the refueling pod at the typical refueling speeds that affect to the stability of the hose and drogue device.

As a solution to this problem US 2006/0284023 describes a refueling pod with a deflection device mounted in its blunt end that reduces the influence of the slipstream on the hose and drogue device.

The present invention is focused to provide a different solution of said problem.

### SUMMARY OF THE INVENTION

It is an object of the present invention a refueling pod mounted on a wing of a tanker aircraft used for refueling a receptor aircraft in flight by means of a hose and drogue device that improves the stability of the hose and drogue device.

It is another object of the present invention a refueling pod mounted on a wing of a tanker aircraft used for refueling a receptor aircraft in flight by means of a hose and drogue device that improves the aerodynamic response of the hose and drogue device.

In one aspect, these and another objects are met by a refueling pod comprising a streamlined-shaped first section that houses the main handling equipment of the hose and drogue device and a second section housing the opening for the deployment/retraction of the hose and drogue device, in which said second section has an streamlined shape and houses an opening which has a symmetrical shape with respect to an hypothetical X-Z plane by the longitudinal axis of the refueling pod and is placed below an hypothetical X-Y plane by said longitudinal axis for reducing the turbulence behind the refueling pod and improving therefore the stability of the hose and drogue device.

In embodiments of the invention, the length L2 of the second section is comprised between the 30-50% of the length L1 of the first section. Hereby it is achieved a refueling pod with a rear fairing that covers the hose serving carriage mounted on the rear bulkhead and houses trailing components, signal lights and tunnel illumination lights with an aerodynamic design.

In embodiments of the invention said opening has an ellipsoidal-type shape and, particularly, an arcuate contour. Hereby it is achieved a opening in said rear fairing adapted for reducing the turbulence influence on the dragged hose and drogue device.

In embodiments of the invention the first section also comprises one horizontal strake (preferably a flat plate of triangular or trapezoidal shape) placed on the lateral border of its external side. Hereby it is achieved a refueling pod that improves the aerodynamic response and stability of the dragged hose and drogue device.

In another aspect, the above-mentioned objects are met using said refueling pod for refueling operations performed at an altitude not bigger that 10.668 m and at an airspeed comprised between 180-325 KCAS.

Other features and advantages of the present invention will be understood from the following detailed description in relation with the enclosed drawings.

### BRIEF DESCRIPTION OF DRAWINGS

Figure 1 is a schematic view of a refueling operation between a tanker aircraft and a receptor aircraft using a hose and drogue device.
Figure 2 is a schematic side view of a refueling pod with a conventional blunt-end.
Figure 3a and 3b are, respectively, schematic side an plan views of a refueling pod according to the present invention.
Figures 4a and 4b are, respectively, transversal views of Figures 3a and 3b by the planes A-A and B-B.
Figures 5, 6a and 6b are the same views of Figures 3a, 4a and 4b for an embodiment of the invention including one strake.
Figure 7 is a perspective view of a refueling pod according to an embodiment of the invention including one strake.
Figures 8a and 8b show a three-dimensional model of the effect of the turbulence behind a refueling pod according to, respectively, the prior art and the present invention.

### DETAILED DESCRIPTION OF THE INVENTION

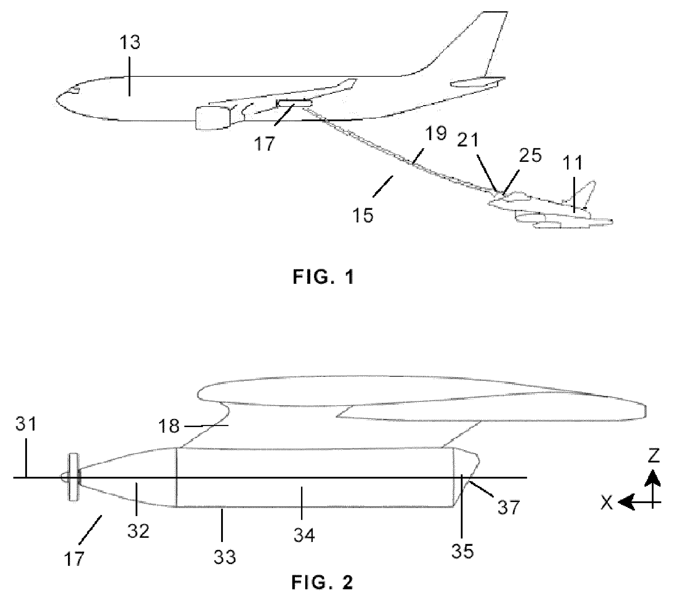

An usual method for in-flight refueling operations illustrated in Figure 1 is based on the use of a hose and drogue device 15. This refueling method employs a flexible hose 19 that trails from a refueling pod 17 located in the tanker aircraft 13 with a drogue 21 (a fitting resembling a windsock or shuttlecock) attached at its narrow end. The receptor aircraft 11 has a probe 25, which is a rigid arm placed on the aircraft's nose or fuselage with a valve that is closed until it mates with the drogue 21 after which it opens and allows fuel to pass from the tanker aircraft 13 to the receptor aircraft 11.

As shown in Figure 2, the typical configuration of a refueling pod 17 mounted on a wing of the tanker aircraft by means of a support element 18 comprises a streamlined-shaped first section 33 that houses the main handling equipment of the hose and drogue device 15 (such as the serving carriage and the trailing components) and a second section 35 with a blunt end that houses the opening 37 for the deployment/retraction of the hose and drogue device 15 (hereinafter will be also referred as the hose 19).

As illustrated in Figure 2, a typical first section 33 is shaped as a body of revolution around a longitudinal axis 31 with a first frustoconical sub-section 32 and a second cylindrical sub-section 34.

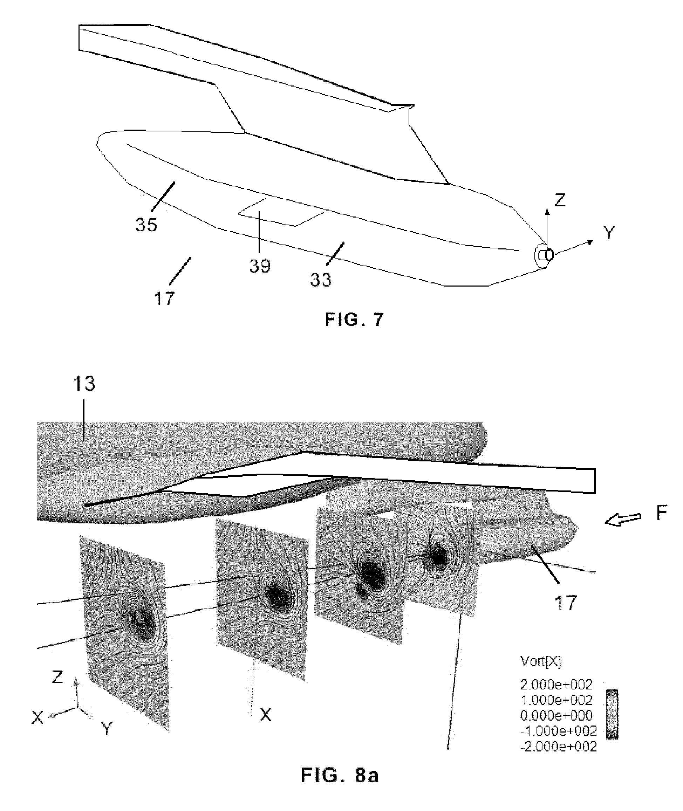

As said before and illustrated in Figure 8a the airflow indicated by arrow F at the typical refueling speeds generates turbulence behind the refueling pod 17 that affect to the stability of the hose 19.

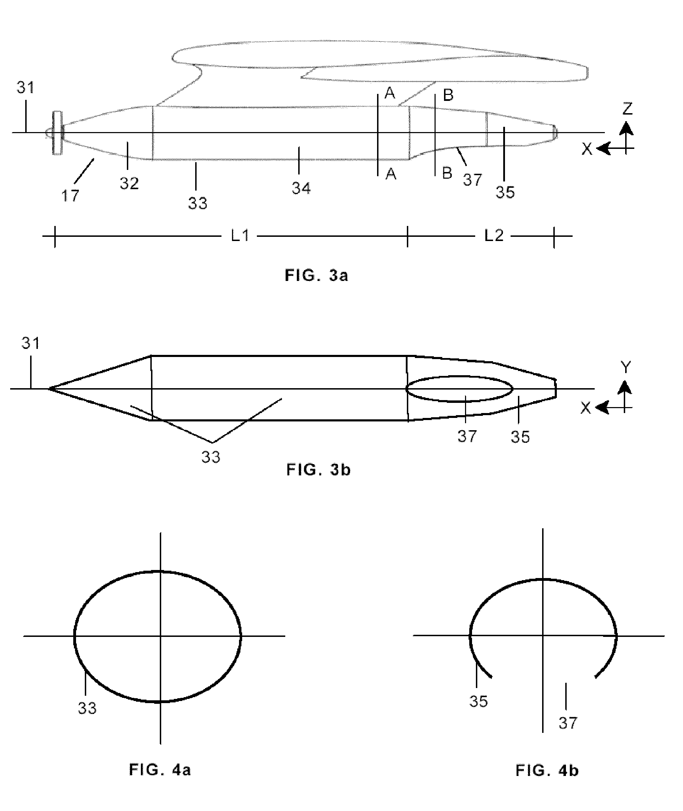

Instead of being a blunt end section, the second section 35 of the refueling pod 17 according to the invention, as illustrated in Figures 3a, 3b, 4a and 4b, has an streamlined shape. On the other hand, the opening 37 giving access to the deployment and/or retraction of the hose and drogue device 15 is placed below an hypothetical X-Y plane by said longitudinal axis 31 and has a symmetrical shape with respect to an hypothetical X-Z plane by said longitudinal axis 31.

Preferably the length L2 of the second section 35 is comprised between the 30-50% of the length L1 of the first section 33 so that it can house an opening 37 of suitable dimensions.

Preferably the opening 37 has an ellipsoidal-type shape with its longer axis oriented in the longitudinal direction as illustrated particularly in Figure 3b where the opening 37 is seen from below.

Preferably the opening 37 has an arcuate contour as illustrated particularly in Figure 3a.

As a consequence of these features of the second section 35 the refueling pod 17, specially when is mounted on a wing of the tanker aircraft, achieves a more streamlined shape with lower drag, without a massive flow separation behind the refueling pod 17 and with a size reduction of the vortex behind it.

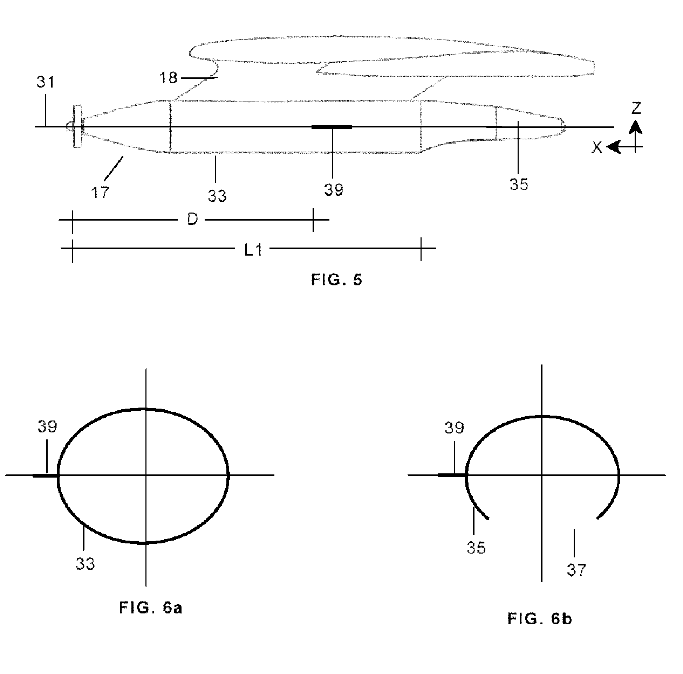

In another embodiment illustrated in Figures 5, 6a and 6b the refueling pod 17 incorporates one horizontal strake 39 on the lateral border of the external side of the first section 33 at a distance D from the frontal end of the first section 33 comprised between the 60-80% of its length L1. This strake 39 shall be understood as a control airflow device that is, preferably, a flat plate having a triangular or a trapezoidal shape.

The triangular strake 39 has a base of a length Lr comprised between 400mm and 800mm and a height Wr comprised between 150mm and 300mm.

The trapezoidal strake 39 has a length Lt1 of its longer base, which is joined to the first section 33, comprised between 400mm and 800mm, a length Lt2 of its shorter base comprised between 300mm and 600mm and a height Wt comprised between 150mm and 300mm.

As a consequence of the incorporation of the strake 39 the refueling pod 17 achieves a second small sized vortex that interacts with the vortex generated by the streamlined second section 35 reducing its intensity and lifting it above the position of the hose 19.

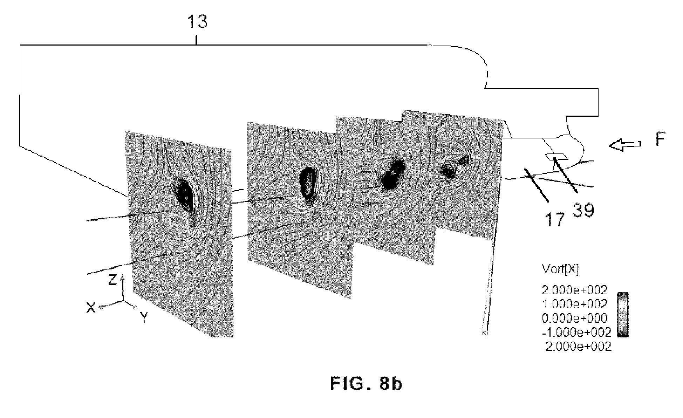

The turbulence generated behind a refueling pod 17 according to this embodiment is shown in Figure 8b. A comparison with Figure 8a illustrates clearly that a refueling pod 17 according to this invention avoid turbulence influence on the hose and drogue device 15 thus improving its aerodynamic response and stability.

In particular it is assured better stability during deployment, operation and guaranteeing better stability at hose rewind free of drogue strikes, at different hose lengths from initial rewind to full hose extension, in both free air or while in-contact with the receiver aircraft, including wet or dry hose deployment/retraction and wet or dry contacts at any of the following conditions:
- Straight flight.
- Coordinated turn up to ±35° degrees bank.
- Smooth roll entry/exit up to 5 degrees/second.
- Airspeed from 180-325 KCAS and altitude from 0-10.668 m.

(Calibrated airspeed in knots (KCAS) is the speed shown by a conventional airspeed indicator after correction for instrument error and position error).

Additionally, it provides smooth hose stability characteristics during a tanker emergency landing with the hose in trail, for either tanker clean configuration (no high-lift devices), tanker slats configuration only, to a tanker full landing configuration (slats and flaps) in free air (no receiver aircraft behind tanker aircraft) for both wet and dry hose conditions.

Although the present invention has been fully described in connection with preferred embodiments, it is evident that modifications may be introduced within the scope thereof, not considering this as limited by these embodiments, but by the contents of the following claims.

## Claims

1. A refueling pod (17) for a tanker aircraft (13) used for refueling a receptor aircraft (11) in flight by means of a hose and drogue device (15), the refueling pod (17) being mounted on a wing of the tanker aircraft (13) and comprising a streamlined-shaped first section (33) that houses the main handling equipment of the hose and drogue device (15) and a second section (35) housing the opening (37) for the deployment/retraction of the hose and drogue device (15), **characterized in that** said second section (35) has an streamlined shape and houses an opening (37) which has a symmetrical shape with respect to an hypothetical X-Z plane by the longitudinal axis (31) of the refueling pod (17) and is placed below an hypothetical X-Y plane by said longitudinal axis (31) for reducing the turbulence behind the refueling pod (17) and improving therefore the stability of the hose and drogue device (15).

2. A refueling pod (17) according to claim 1, wherein the length L2 of said second section (35) is comprised between the 30-50% of the length L1 of the first section (33).

3. A refueling pod (17) according to any of claims 1-2, wherein said opening (37) has an ellipsoidal-type shape.

4. A refueling pod (17) according to any of claims 1-3, wherein said opening (37) has an arcuate contour.

5. A refueling pod (17) according to any of claims 1-4, wherein the first section (33) also comprises one horizontal strake (39) placed on the lateral border of its external side.

6. A refueling pod (17) according to claim 5, wherein said strake (39) is placed at a distance D from the frontal end of the first section (33) comprised between the 60-80% of its length L1.

7. A refueling pod (17) according to claim 6, wherein said strake (39) is a flat plate.

8. A refueling pod (17) according to claim 7, wherein said strake (39) has a triangular shape, with a base of a length Lr comprised between 400mm and 800mm and a height Wr comprised between 150mm and 300mm.

9. A refueling pod (17) according to claim 7, wherein said strake (39) has a trapezoidal shape, the length Lt1 of its longer base, which is joined to the first section (33), being comprised between 400mm and 800mm, the length Lt2 of its shorter base comprised between 300mm and 600mm and the height Wt being comprised between 150mm and 300mm.

10. Use of a refueling pod (17) according to any of claims 1-9 for refueling operations performed at an altitude not bigger that 10.668m and at an airspeed comprised between 180-325 KCAS.

11. Tanker aircraft (13) comprising a refueling pod (17) according to any of claims 1-9.
